# EUROPEAN PATENT APPLICATION

(11) **EP 4 095 969 A1**
(43) Date of publication of application: **30.11.2022**
(21) Application number: 21744233.4
(22) Date of filing: 12.01.2021
(51) Int. Cl.: H01M 10/052, H01M 10/0567, H01M 10/0568, H01M 10/0569

(54) **NONAQUEOUS ELECTROLYTE SECONDARY BATTERY**

(30) Priority: 23.01.2020 JP 2020009022
(71) Applicant: SANYO Electric Co., Ltd., Daito-shi Osaka 574-8534 (JP)
(72) Inventor: MIYACHI, Yoshikazu, Osaka-shi, Osaka 540-6207 (JP); DONOUE, Kazunori, Osaka-shi, Osaka 540-6207 (JP); MIYAZAKI, Shinya, Osaka-shi, Osaka 540-6207 (JP)
(74) Representative: Novagraaf International SA
(86) International application number: PCT/JP2021/000707
(87) International publication number: WO 2021/149539

(57) **Abstract**

This nonaqueous electrolyte secondary battery is provided with: an electrode body that comprises a positive electrode and a negative electrode; and a nonaqueous electrolyte solution that contains a nonaqueous solvent. The ratio of the capacity (Qn) of the negative electrode to the capacity (Qp) of the positive electrode, namely Qn/Qp is 1.4 or more; and the nonaqueous electrolyte solution contains, relative to the total volume of the nonaqueous solvent at 25°C, from 0.5% by volume to 10% by volume of methyl acetate and from 0.01 mole/L to 0.05 mole/L of lithium bisoxalato borate.

## Description

### TECHNICAL FIELD

The present disclosure relates to a non-aqueous electrolyte secondary battery.

### BACKGROUND

Non-aqueous electrolyte secondary batteries are used for various purposes, and components of batteries such as positive electrodes, negative electrodes, and non-aqueous electrolytes are improved to suit the needed characteristics for the respective purposes of use. For example, Patent Literature 1 discloses a battery with improved low-temperature output characteristics obtained by a combination of a specific positive electrode mixture with an electrolyte solution that contains a chain carboxylate ester such as methyl propionate.

### CITATION LIST

### PATENT LITERATURE

Patent Literature 1: International Publication No. WO 2016/084357

### SUMMARY

In the art of non-aqueous electrolyte secondary batteries for use in hybrid electric vehicles, a goal is to achieve high output and high durability at the same time. The technique disclosed in Patent Literature 1 does not take durability into consideration, and still has room for improvement.

According to an aspect of the present disclosure, there is provided a non-aqueous electrolyte secondary battery comprising an electrode assembly including a positive electrode and a negative electrode; and a non-aqueous electrolyte solution including a non-aqueous solvent. The ratio (Qn/Qp) of a negative electrode capacity (Qn) to a positive electrode capacity (Qp) is 1.4 or greater, and the non-aqueous electrolyte solution contains 0.5% by volume to 10% by volume of methyl acetate at 25°C relative to the total volume of the non-aqueous solvent and 0.01 mol/L to 0.05 mol/L of lithium bis(oxalato)borate.

According to an aspect of the present disclosure, a non-aqueous electrolyte secondary battery can achieve high output and high durability at the same time.

### BRIEF DESCRIPTION OF DRAWINGS

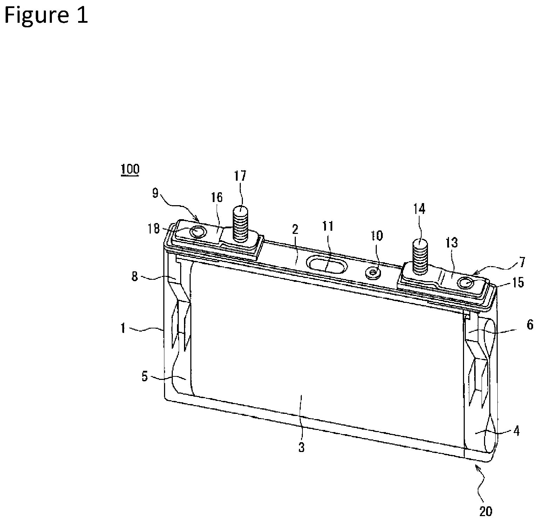

FIG. 1 is a perspective view of a non-aqueous electrolyte secondary battery according to an example embodiment, illustrating a structure of the inside of a battery case from which the front side of an outer housing has been removed.

### DESCRIPTION OF EMBODIMENTS

High output can be expected when methyl acetate is used as a non-aqueous solvent, as it has a lower viscosity than methyl propionate, but such use has been considered to be difficult because durability is low as methyl acetate is easily decomposed. However, the present inventors have developed a non-aqueous electrolyte secondary battery with reduced resistance and improved durability as they have discovered that 0.5% by volume to 10% by volume of methyl acetate at 25°C can be used as a non-aqueous solvent when the side reaction in the negative electrode is suppressed by containing 0.01 mol/L to 0.05 mol/L of lithium bis(oxalato)borate and when the load on the negative electrode during charging and discharging is reduced by increasing the capacity of the negative electrode to be 1.4 times or more the capacity of the positive electrode.

An example embodiment of the present disclosure will be described in detail below. Although, according to the present embodiment, a secondary battery 100 including an outer housing 1 having a rectangular shape and made of metal is illustrated by way of example, the outer housing is not limited to those having a rectangular shape and may have, for example, a cylindrical shape. Although a wound electrode assembly 3 including a positive electrode and a negative electrode that are wound with a separator interposed therebetween is illustrated by way of example, the electrode assembly may be a laminated electrode assembly that includes a plurality of positive electrodes and a plurality of negative electrodes alternately laminated one after another with a separator interposed therebetween. Although the positive electrode and the negative electrode both having mixture layers on both sides of the respective cores are illustrated by way of example, the mixture layers are not always formed on both sides of the respective cores and may be formed on at least one side of the respective cores.

As illustrated in FIG. 1, the secondary battery 100 includes the wound electrode assembly 3 in which a positive electrode and a negative electrode are wound with a separator interposed therebetween and which is shaped into a flat shape having a flat portion and a pair of curved portions, an electrolyte, and the outer housing 1 in which the electrode assembly 3 and the electrolyte are housed. The outer housing 1 and a sealing plate 2 are both made of metal, and are preferably made of aluminum or an aluminum alloy.

The outer housing 1 includes a bottom having a substantially rectangular shape in a bottom view, and a side wall that extends upright from the edge of the bottom. The side wall is perpendicular to the bottom. The size of the outer housing 1 is not particularly limited, but is, for example, 60 mm to 160 mm in length in the lateral direction, 60 mm to 100 mm in height, and 10 mm to 40 mm in thickness.

The positive electrode is an elongated member that includes a positive electrode core made of metal and positive electrode mixture layers formed on both sides of the core, and has, on one end thereof in the shorter side direction, a band-shaped positive electrode core exposed portion 4 where the positive electrode core is exposed along the longer side direction. Similarly, the negative electrode is an elongated member that includes a negative electrode core made of metal and negative electrode mixture layers formed on both sides of the core, and has, on one end thereof in the shorter side direction, a band-shaped negative electrode core exposed portion 5 where the negative electrode core is exposed along the longer side direction. The electrode assembly 3 has a configuration in which the positive electrode and the negative electrode are wound with the separator interposed therebetween in a state in which the positive electrode core exposed portion 4 of the positive electrode is disposed toward one end in the axial direction and the negative electrode core exposed portion 5 of the negative electrode is disposed toward another end in the axial direction.

A positive electrode current collector 6 is connected to a laminated portion of the positive electrode core exposed portion 4 of the positive electrode, and a negative electrode current collector 8 is connected to a laminated portion of the negative electrode core exposed portion 5 of the negative electrode. The positive electrode current collector 6 is preferably made of aluminum or an aluminum alloy. The negative electrode current collector 8 is preferably made of copper or a copper alloy. A positive electrode terminal 7 includes a positive electrode external conductive portion 13 disposed on the sealing plate 2 on the side external to the battery, a positive electrode bolt portion 14 connected to the positive electrode external conductive portion 13, and a positive electrode insertion portion 15 inserted into a through hole formed in the sealing plate 2. The positive electrode terminal 7 is electrically connected to the positive electrode current collector 6. A negative electrode terminal 9 includes a negative electrode external conductive portion 16 disposed on the sealing plate 2 on the side external to the battery, a negative electrode bolt portion 17 connected to the negative electrode external conductive portion 16, and a negative electrode insertion portion 18 inserted into a through hole formed in the sealing plate 2. The negative electrode terminal 9 is electrically connected to the negative electrode current collector 8.

The positive electrode terminal 7 is fixed to the sealing plate 2 with an external insulating member interposed therebetween, and the positive electrode current collector 6 is fixed to the sealing plate 2 with an internal insulating member interposed therebetween. The internal insulating member is disposed between the sealing plate 2 and the positive electrode current collector 6, and the external insulating member is disposed between the sealing plate 2 and the positive electrode terminal 7. Similarly, the negative electrode terminal 9 is fixed to the sealing plate 2 with an external insulating member interposed therebetween, and the negative electrode current collector 8 is fixed to the sealing plate 2 with an internal insulating member interposed therebetween. The internal insulating member is disposed between the sealing plate 2 and the negative electrode current collector 8, and the external insulating member is disposed between the sealing plate 2 and the negative electrode terminal 9.

The electrode assembly 3 is housed in the outer housing 1. The sealing plate 2 is joined to the edge of the opening of the outer housing 1 by, for example, laser welding. The sealing plate 2 has an electrolyte injection hole 10, and after an electrolyte is introduced into the outer housing 1 through this electrolyte injection hole 10, the electrolyte injection hole 10 is sealed by a sealing plug. The sealing plate 2 includes a gas release valve 11 for releasing gas when the pressure inside the battery has reached a predetermined value or higher.

The components of the electrode assembly 3, such as a positive electrode, a negative electrode, a separator, and a non-aqueous electrolyte solution, in particular, a non-aqueous electrolyte solution, will be described in detail below.

### POSITIVE ELECTRODE

The positive electrode includes a positive electrode core made of, for example, metal foil and a positive electrode mixture layer formed on the positive electrode core. Examples of the positive electrode core include foil of metal that is stable in an electric potential range of the positive electrode, such as aluminum, and a film having such metal disposed in its surface layer. The positive electrode mixture layer contains, for example, a positive electrode active material, a binder, and a conductive material. The positive electrode can be prepared by, for example, applying positive electrode mixture slurry containing, for example, a positive electrode active material, a binder, and a conductive material to the positive electrode core, drying it to form a positive electrode mixture layer, and then rolling the positive electrode mixture layer. While the capacity (Qp) of the positive electrode varies depending on, for example, the ratio of the positive electrode active material in the positive electrode mixture layer or the thickness of the positive electrode mixture layer, it may be adjusted by, for example, varying the amount of the positive electrode mixture slurry applied.

Examples of the positive electrode active material contained in the positive electrode mixture layer include a lithium metal composite oxide containing a transition metal element such as Co, Mn, or Ni. Examples of the lithium metal composite oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (where M represents at least one of Na, Mg, Sc, Y, Mn, Fe, Co, Ni, Cu, Zn, Al, Cr, Pb, Sb, and B, 0<x≤1.2, 0<y≤0.9, and 2.0≤z≤2.3). One of the above may be used alone, or two or more of the above may be used as a mixture. In terms of achieving an increased capacity of the non-aqueous electrolyte secondary battery, the positive electrode active material preferably contains a lithium nickel composite oxide such as LiₓNiO₂, LiₓCo_{y}Ni_{1-y}O₂, or LiₓNi_{1-y}M_{y}O_{z} (where M represents at least one of Na, Mg, Sc, Y, Mn, Fe, Co, Ni, Cu, Zn, Al, Cr, Pb, Sb, and B, 0<x≤1.2, 0<y≤0.9, and 2.0≤z≤2.3).

Examples of the conductive material contained in the positive electrode mixture layer include carbon-based particles of, for example, carbon black (CB), acetylene black (AB), Ketjen black, and graphite. One of the above may be used alone, or two or more of the above may be used in combination.

Examples of the binder contained in the positive electrode mixture layer include polytetrafluoroethylene (PTFE), polyvinylidene fluoride (PVdF), and other fluorine-based resins, polyacrylonitrile (PAN), polyimide-based resins, acrylic-based resins, and polyolefin-based resins. One of the above may be used alone, or two or more of the above may be used in combination.

### NEGATIVE ELECTRODE

The negative electrode includes a negative electrode core made of, for example, metal foil and a negative electrode mixture layer formed on the negative electrode core. For example, foil of metal that is stable in an electric potential range of the negative electrode, such as copper or a copper alloy, or a film having such metal disposed in its surface layer can be used as the negative electrode core. The negative electrode mixture layer contains, for example, a negative electrode active material and a binder. The negative electrode can be prepared by, for example, applying negative electrode mixture slurry containing, for example, a negative electrode active material and a binder to the negative electrode core, drying it to form a negative electrode mixture layer, and then rolling the negative electrode mixture layer. While the capacity (Qn) of the negative electrode varies depending on, for example, the ratio of the negative electrode active material in the negative electrode mixture layer or the thickness of the negative electrode mixture layer, it may be adjusted by, for example, varying the amount of the negative electrode mixture slurry applied.

The negative electrode active material contained in the negative electrode mixture layer is any material that is capable of reversibly occluding and releasing lithium ions without any other particular limitation; typically, a carbon material such as graphite is used. Examples of graphite include natural graphite such as flake graphite, massive graphite, and earthy graphite, and artificial graphite such as massive artificial graphite and graphitized mesophase carbon microbeads. For example, metal such as Si or Sn that forms an alloy with Li, a metal compound that contains metal such as Si or Sn, or a lithium titanium composite oxide may be used as the negative electrode active material. Such a material having a carbon coating thereon may also be used. For example, a Si-containing compound represented by SiOₓ (where 0.5≤x≤1.6) or a Si-containing compound including Si microparticles dispersed in a lithium silicate phase represented by Li_{2y}SiO_{(2+y)} (where 0<y<2) may be used in combination with graphite.

Similar to the positive electrode, examples of the binder contained in the negative electrode mixture layer include PTFE, PVdF, and other fluorine-containing resins, PAN, polyimides, acrylic resins, polyolefins, and in a preferred embodiment, styrene-butadiene rubber (SBR) is used. The negative electrode mixture layer may contain, for example, CMC or a salt thereof, polyacrylic acid (PAA) or a salt thereof, or polyvinyl alcohol (PVA).

The ratio (Qn/Qp) of the negative electrode capacity (Qn) to the positive electrode capacity (Qp) is 1.4 or greater. As this enables reduction in the load on the negative electrode during charging and discharging, its combination with an electrolyte solution described below achieves improved durability along with reduced battery resistance.

### SEPARATOR

For example, a porous sheet having ion permeability and insulating properties is used as the separator. Specific examples of the porous sheet include a microporous thin film, woven fabric, and nonwoven fabric. Suitable examples of the material for the separator include polyethylene, polypropylene, and other polyolefins and cellulose. The separator may have either a single-layer structure or a multi-layer structure. The separator may have, on its surface, a high heat resistance resin layer of, for example, an aramid resin and a filler layer that contains an inorganic compound filler.

### NON-AQUEOUS ELECTROLYTE SOLUTION

The non-aqueous electrolyte solution includes a non-aqueous solvent and an electrolyte salt dissolved in the non-aqueous solvent. The non-aqueous electrolyte solution contains 0.5% by volume to 10% by volume of methyl acetate (MA) at 25°C relative to the total volume of the non-aqueous solvent and 0.01 mol/L to 0.05 mol/L of lithium bis(oxalato)borate (LiBOB). The use of such a non-aqueous electrolyte solution achieves improved durability along with reduced battery resistance.

A chain carboxylate ester other than MA may be contained as the non-aqueous solvent. Examples of the chain carboxylate ester other than MA include methyl formate, ethyl formate, propyl formate, ethyl acetate, propyl acetate, methyl propionate (MP), ethyl propionate (EP), propyl propionate, and methyl pivalate. Although two or more chain carboxylate esters may be used in combination as the non-aqueous solvent, at least MA is used, and in a preferred embodiment, MA is used substantially alone. The content of the chain carboxylate ester is preferably 0.5% by volume to 15% by volume at 25°C relative to the total volume of the non-aqueous solvent.

Examples of the non-aqueous solvent other than the chain carboxylate ester include cyclic carboxylate esters, cyclic carbonate esters, chain carbonate esters, cyclic ethers, chain ethers, nitriles such as acetonitrile, amides such as dimethylformamide, and halogen substitution products of these solvents in which hydrogens are substituted with a halogen atom such as fluorine. One of the above may be used, or two or more of the above may be used in combination. Examples of the cyclic carboxylate esters include γ-butyrolactone (GBL) and γ-valerolactone (GVL).

Examples of the cyclic carbonate esters include ethylene carbonate (EC), propylene carbonate (PC), and butylene carbonate. Among these, EC is particularly preferable. Examples of the chain carbonate esters include dimethyl carbonate (DMC), ethylmethyl carbonate (EMC), diethyl carbonate (DEC), methyl propyl carbonate, ethyl propyl carbonate, and methyl isopropyl carbonate. Among these, DMC and EMC are particularly preferable.

Examples of the cyclic ethers include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers. Examples of the chain ethers include 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

Examples of the halogen substitution products include fluorinated ethers, fluorinated cyclic carbonate esters, fluorinated chain carbonate esters, and fluorinated chain carboxylate esters such as methyl fluoropropionate (FMP). Examples of the fluorinated ethers include 2,2,2-trifluoroethyl methyl ether and 1,1,2,2-tetrafluoroethyl-2,2,2-trifluoroethyl. Examples of the fluorinated cyclic carbonate esters include 4-fluoroethylene carbonate (FEC), 4,5-difluoroethylene carbonate, 4,4-difluoroethylene carbonate, 4,4,5-trifluoroethylene carbonate, and 4,4,5,5-tetrafluoroethylene carbonate. Examples of the fluorinated chain carboxylate esters include fluorinated ethyl propionate, fluorinated methyl acetate, fluorinated ethyl acetate, fluorinated propyl acetate, ethyl 2,2,2-trifluoroacetate, methyl 3,3,3-trifluoropropionate, and methyl pentafluoropropionate.

In addition to MA, the non-aqueous solvent preferably further contains at least one selected from EC, EMC, and DMC. This lowers the viscosity and thereby achieves improved durability along with reduced resistance. Examples of suitable non-aqueous solvents include a non-aqueous solvent that contains MA, EC, EMC, and DMC in a volume ratio of x:(15 to 35):((30-x) to (50-x)):(25 to 45) at 25°C where x is 0.5% by volume to 15% by volume.

The electrolyte salt is preferably a lithium salt that contains lithium bis(oxalato)borate (LiBOB, Li(B(C₂O₄)₂)). Examples of lithium salts other than LiBOB include LiBF₄, LiClO₄, LiPF₆ (lithium hexafluorophosphate), LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (where 1<x<6, and n is 1 or 2), LiB₁₀Cl₁₀, LiCl, LiBr, Lil, lithium chloroborane, lithium lower aliphatic carboxylates, borates such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {where l and m are integers of 0 or greater}. One of these lithium salts may be used alone, or two or more of these lithium salts may be used as a mixture. Among these lithium salts other than LiBOB, LiPF₆ is preferably used in terms of, for example, ionic conductivity and electrochemical stability. The concentration of LiPF₆ is, for example, 0.8 mol/L to 1.8 mol/L. The non-aqueous electrolyte solution may further contain an additive such as vinylene carbonate (VC).

### EXAMPLES

The present disclosure will be further described below with reference to examples, but the present disclosure is not limited to these examples.

### Example 1

### PREPARATION OF POSITIVE ELECTRODE

A lithium metal composite oxide represented by LiNi_{0.55}Mn_{0.20}Co_{0.25}O₂ was used as a positive electrode active material. The positive electrode active material, acetylene black, and PVdF were mixed in a mass ratio of 100:1:1, and NMP was added to this mixture to prepare positive electrode mixture slurry. Next, the positive electrode mixture slurry was applied to both sides of a positive electrode core composed of aluminum foil except over the portion where a lead was to be connected, and the coating was dried. After the coating was rolled using a roller, it was cut into pieces of a predetermined electrode size to prepare a positive electrode having positive electrode mixture layers on both sides of the positive electrode core.

### PREPARATION OF NEGATIVE ELECTRODE

Graphite was used as a negative electrode active material. The negative electrode active material, an SBR dispersion, and a sodium salt of CMC were mixed in a mass ratio of 100:1:1, and water was added to this mixture to prepare negative electrode mixture slurry. Next, the negative electrode mixture slurry was applied to both sides of a negative electrode core composed of copper foil except over the portion where a lead was to be connected, and the coating was dried. In the process of applying the negative electrode mixture slurry, the amount of the negative electrode mixture slurry applied was adjusted so that the ratio (Qn/Qp) of the negative electrode capacity (Qn) to the positive electrode capacity (Qp) was 1.6. After the coating was rolled using a roller, it was cut into pieces of a predetermined electrode size to prepare a negative electrode having negative electrode mixture layers on both sides of the negative electrode core.

### FORMULATION OF NON-AQUEOUS ELECTROLYTE SOLUTION

Methyl acetate (MA), ethylene carbonate (EC), ethylmethyl carbonate (EMC), and dimethyl carbonate (DMC) were mixed in a volume ratio of 3:25:37:35 at 25°C, and to this mixed solvent, lithium bis(oxalato)borate (LiBOB) was added to achieve a concentration of 0.025 mol/L, and lithium hexafluorophosphate (LiPF₆) was added to achieve a concentration of 1.15 mol/L to prepare a non-aqueous electrolyte solution.

### PREPARATION OF TEST CELL

A lead was attached to each of the above-described negative electrode and the above-described positive electrode to prepare a laminated electrode assembly that includes electrodes alternately laminated one after another with a separator interposed therebetween. A single-layer polypropylene separator was used as the separator. The prepared electrode assembly and the above-described non-aqueous electrolyte were placed in a rectangular battery case to prepare a test cell.

### Example 2

A test cell was prepared in the same manner as in Example 1 except that in the formulation of the non-aqueous electrolyte solution, a mixed solvent of MA, EC, EMC, and DMC mixed in a volume ratio of 6:25:34:35 was used.

### Example 3

A test cell was prepared in the same manner as in Example 1 except that in the preparation of the negative electrode, the amount of the negative electrode mixture slurry applied was adjusted so that Qn/Qp was 1.4.

### Example 4

A test cell was prepared in the same manner as in Example 1 except that in the formulation of the non-aqueous electrolyte solution, LiBOB was added to achieve a concentration of 0.01 mol/L.

### Example 5

A test cell was prepared in the same manner as in Example 1 except that in the formulation of the non-aqueous electrolyte solution, LiBOB was added to achieve a concentration of 0.05 mol/L.

### Example 6

A test cell was prepared in the same manner as in Example 1 except that in the formulation of the non-aqueous electrolyte solution, a mixed solvent of MA, EC, EMC, and DMC mixed in a volume ratio of 10:25:30:35 was used.

### Comparative Example 1

A test cell was prepared in the same manner as in Example 1 except that in the formulation of the non-aqueous electrolyte solution, MA was not used, and a mixed solvent of EC, EMC, and DMC mixed in a volume ratio of 25:40:35 was used.

### Comparative Example 2

A test cell was prepared in the same manner as in Example 1 except that in the formulation of the non-aqueous electrolyte solution, MA was not used, a mixed solvent of EC, EMC, and DMC mixed in a volume ratio of 25:40:35 was used, and LiBOB was not added.

### Comparative Example 3

A test cell was prepared in the same manner as in Example 1 except that in the formulation of the non-aqueous electrolyte solution, LiBOB was not added.

### Comparative Example 4

A test cell was prepared in the same manner as in Example 1 except that in the formulation of the non-aqueous electrolyte solution, LiBOB was added to achieve a concentration of 0.1 mol/L.

### Comparative Example 5

A test cell was prepared in the same manner as in Example 1 except that in the formulation of the non-aqueous electrolyte solution, a mixed solvent of MA, EC, EMC, and DMC mixed in a volume ratio of 15:25:25:35 was used, and LiBOB was added to achieve a concentration of 0.05 mol/L.

### Comparative Example 6

A test cell was prepared in the same manner as in Example 1 except that in the preparation of the negative electrode, the amount of the negative electrode mixture slurry applied was adjusted so that Qn/Qp was 1.2.

### Comparative Example 7

A test cell was prepared in the same manner as in Example 1 except that in the formulation of the non-aqueous electrolyte solution, MP was used in place of MA, and a mixed solvent of MP, EC, EMC, and DMC mixed in a volume ratio of 6:25:34:35 was used.

The performance of the test cells prepared according to the examples and the comparative examples was evaluated by the following method, and the evaluation results are given in Table 1.

### MEASUREMENT OF INITIAL OUTPUT RESISTANCE (DCIR) UNDER ROOM TEMPERATURE CONDITIONS

The test cells were charged under a temperature environment of 25°C to a state of charge (SOC) of 50%. The charged test cells were then discharged at 1C, 2C, 5C, 10C, 15C, 20C, 25C, and 30C rates for 10 seconds. The respective cell voltages during discharging were measured and plotted relative to a corresponding electric current value to determine the resistances during discharging. Table 1 shows the results for the examples and the comparative examples in relative values assuming the DCIR of the test cell prepared according to Example 1 as 100.

### EVALUATION OF HIGH-TEMPERATURE STORAGE CHARACTERISTICS

For the test cells for which initial discharge capacities were measured, capacity retention rates after high-temperature storage were determined by the following method.
(1) A test cell was charged at a constant current of 5 A until the cell voltage reached 4.1 V, and then charged at a constant voltage of 4.1 V for 1.5 hours.
(2) The test cell was stored at 70°C with an SOC of 80% for 56 days.
(3) The test cell was discharged at a constant current of 5 A until the cell voltage reached 2.5 V.
(4) The test cell was charged at a constant current of 5 A until the cell voltage reached 4.1 V, and then charged at a constant voltage of 4.1 V for 1.5 hours.
(5) The test cell was discharged at a constant current of 5 A until the cell voltage reached 2.5 V. A discharge capacity measured at this point was defined as a post-storage discharge capacity, and the post-storage discharge capacity was divided by the initial discharge capacity to calculate a capacity retention rate after high-temperature storage. Table 1 shows the results for the examples and the comparative examples in relative values assuming the capacity retention rate of the test cell prepared according to Example 1 as 100.

**[Table 1]**

| | on-aqueous Electrolyte Solution | | | Positive Electrode and Negative Electrode | Evaluation Results | |
|---|---|---|---|---|---|---|
| | Non-aqueous Solvent | | Electrolyte | Qn/Qp | DCIR | Capacity Retention Rate |
| | MA [vol%] | MP [vol%] | LiBOB [mol/L] | | | |
| Example 1 | 3 | 0 | 0.025 | 1.6 | 100 | 100 |
| Example 2 | 6 | 0 | 0.025 | 1.6 | 98.8 | 100.1 |
| Example 3 | 3 | 0 | 0.025 | 1.4 | 100.6 | 99.6 |
| Example 4 | 3 | 0 | 0.01 | 1.6 | 100.3 | 99.4 |
| Example 5 | 3 | 0 | 0.05 | 1.6 | 100.7 | 100.2 |
| Example 6 | 10 | 0 | 0.025 | 1.6 | 97.9 | 99.8 |
| Comparative Example 1 | 0 | 0 | 0.025 | 1.6 | 107.7 | 98.6 |
| Comparative Example 2 | 0 | 0 | 0 | 1.6 | 109.0 | 95.1 |
| Comparative Example 3 | 3 | 0 | 0 | 1.6 | 103.1 | 96.8 |
| Comparative Example 4 | 3 | 0 | 0.1 | 1.6 | 103.2 | 100.3 |
| Comparative Example 5 | 15 | 0 | 0.05 | 1.6 | 100.9 | 98.5 |
| Comparative Example 6 | 3 | 0 | 0.025 | 1.2 | 100.7 | 98.5 |
| Comparative Example 7 | 0 | 6 | 0.025 | 1.6 | 102.9 | 98.8 |

As can be seen from Table 1, each of the test cells of the examples had a low DCIR value and a high capacity retention rate. In contrast, none of the test cells of the comparative examples achieved both of a low DCIR value and a high capacity retention rate.

### REFERENCE SIGNS LIST

1 outer housing
2 sealing plate
3 electrode assembly
4 positive electrode core exposed portion
5 negative electrode core exposed portion
6 positive electrode current collector
7 positive electrode terminal
8 negative electrode current collector
9 negative electrode terminal
10 electrolyte injection hole
11 gas release valve
13 positive electrode external conductive portion
14 positive electrode bolt portion
15 positive electrode insertion portion
16 negative electrode external conductive portion
17 negative electrode bolt portion
18 negative electrode insertion portion
100 secondary battery

## Claims

1. A non-aqueous electrolyte secondary battery comprising:
an electrode assembly including a positive electrode and a negative electrode; and
a non-aqueous electrolyte solution including a non-aqueous solvent,
wherein the ratio (Qn/Qp) of a negative electrode capacity (Qn) to a positive electrode capacity (Qp) is 1.4 or greater, and
wherein the non-aqueous electrolyte solution contains 0.5% by volume to 10% by volume of methyl acetate at 25°C relative to the total volume of the non-aqueous solvent and 0.01 mol/L to 0.05 mol/L of lithium bis(oxalato)borate.

2. The non-aqueous electrolyte secondary battery according to claim 1, wherein the non-aqueous solvent further contains at least one selected from ethylene carbonate, ethylmethyl carbonate, and dimethyl carbonate.

3. The non-aqueous electrolyte secondary battery according to claim 1 or 2, wherein the non-aqueous electrolyte solution further contains lithium hexafluorophosphate.
